# FASCICULE DE BREVET EUROPEEN

(11) **EP 4 078 829 B1**
(45) Date de publication et mention de la délivrance du brevet: **31.01.2024**
(21) Numéro de dépôt: 20824580.3
(22) Date de dépôt: 18.12.2020
(51) Int. Cl.: H04B 7/0491, H04B 7/06, H04B 7/08, H01Q 3/24

(54) **PROCEDE, DISPOSITIF ET SYSTEME DE SELECTION D'UNE ANTENNE**
VERFAHREN, VORRICHTUNG UND SYSTEM ZUR AUSWAHL EINER ANTENNE
METHOD, DEVICE AND SYSTEM FOR SELECTING AN ANTENNA

(30) Priorité: 20.12.2019 FR 1915184
(43) Date de publication de la demande: 26.10.2022
(73) Titulaire: Safran Electronics & Defense, 75015 Paris (FR)
(72) Inventeur: TODESCHINI, Eric, 75015 PARIS (FR)
(74) Mandataire: Cabinet Le Guen Maillet
(86) Numéro de dépôt international: PCT/EP2020/086979
(87) Numéro de publication internationale: WO 2021/123132

(56) Documents cités:
- WO-A1-2018/055179
- JP-A- H11 122 152
- US-A1- 2005 063 343
- US-A1- 2005 285 784

## Description

### DOMAINE TECHNIQUE

L'invention concerne un procédé, un dispositif et un système de sélection d'une antenne.

### ETAT DE LA TECHNIQUE ANTERIEURE

La préservation des êtres humains est devenue une préoccupation majeure dans bien des domaines. C'est ainsi que dans beaucoup de missions périlleuses, les êtres humains sont remplacés par des dispositifs mobiles sans pilote. On peut citer par exemple certaines missions d'observation sur des zones dangereuses telles que des zones de conflit, des chantiers en hauteur, ou des sites nucléaires, assurées par des dispositifs aéroportés sans pilote appelés drones, des dispositifs roulants, flottants ou submersibles.

Bien que certains dispositifs mobiles sans pilote soient entièrement automatiques, beaucoup de ces dispositifs sont commandés à distance par un ou plusieurs êtres humains à partir d'une station de commande. Ces dispositifs mobiles sans pilote doivent généralement transmettre des résultats d'observation soit à une personne qui les commande, soit à une personne chargée d'analyser des données issues de ces observations. Ces données comprennent fréquemment des images et parfois des vidéos. Il est alors nécessaire d'établir des communications sans fils entre les dispositifs mobiles sans pilote et la station de commande pour assurer un contrôle à distance desdits dispositifs et une transmission des données d'observation. De telles communications doivent être le plus fiables possible afin, d'une part, qu'une perte de contrôle n'entraîne pas la perte d'un dispositif mobile sans pilote pouvant avoir un coût très élevé, et d'autre part, pour que les données d'observation soient le plus exploitables possible.

Afin de fiabiliser les communications entre la station de commande et un dispositif mobile sans pilote, la station de commande et ledit dispositif mobile peuvent être équipés d'une pluralité d'antennes. Afin d'augmenter le gain et la portée de ces antennes, il est courant d'utiliser des antennes directionnelles couvrant chacune un secteur prédéfini au voisinage de la pluralité d'antennes. L'ensemble des secteurs prédéfinis forme une zone de portée autour de la pluralité d'antennes. Lorsque le dispositif mobile sans pilote est un drone, la zone de portée d'une station de commande peut par exemple prendre la forme d'une demi-sphère autour de la pluralité d'antennes de la station de commande, alors que la zone de portée du drone peut prendre la forme d'une sphère autour de la pluralité d'antennes du drone.

Par définition, un dispositif mobile sans pilote se déplace autour de la station de commande. Par conséquent, ledit dispositif mobile passe successivement d'un secteur prédéfini à un autre. Chaque antenne de la pluralité d'antennes adressant un secteur prédéfini, il est nécessaire de déterminer quelles antennes utiliser pour établir la meilleure communication possible entre la station de commande et ledit dispositif mobile.

Il est souhaitable d'utiliser une méthode de sélection d'une antenne suffisamment réactive pour qu'il n'y ait aucune rupture de communication entre la station de commande et le dispositif mobile lors d'un passage d'un secteur prédéterminé à un autre ou lorsqu'un dispositif mobile apparaît dans la zone de portée de la station de commande ou lorsqu'une rupture de la liaison entre un dispositif mobile et la station de commande apparaît.

La demande de brevet WO 2018/055179 déposée par la demanderesse divulgue un procédé de sélection d'une antenne. Le procédé tel que divulgué ne permet pas un suivi du déplacement du dispositif mobile continu et sans interruption.

La demande de brevet US 2005/285784 divulgue un dispositif de communication par satellite avec une antenne intelligente.

La demande de brevet JP H11 122152 divulgue un système de réception par diversité.

La demande de brevet US 2005/063343 divulgue un système de pilotage d'antenne pour un point d'accès basé sur des trames de contrôle.

### EXPOSE DE L'INVENTION

La présente invention vise à améliorer le suivi d'un dispositif mobile en sélectionnant de manière rapide et fiable l'antenne pour échanger des données entre un premier dispositif et un second dispositif mobile.

Selon un premier aspect de la présente invention, la présente invention concerne un procédé de sélection d'une antenne dans un système comprenant un premier dispositif et au moins un second dispositif mobile, le système formant un réseau de communication dans lequel le premier dispositif communique le au moins un second dispositif en utilisant une technique d'accès au médium de type accès multiple à
répartition dans le temps dans laquelle chaque communication se fait dans des trames, chaque trame étant divisée en une pluralité d'intervalles de temps comprenant un premier intervalle de temps permettant au premier dispositif d'émettre un premier signal à destination du second dispositif et permettant au second dispositif de se synchroniser temporellement sur une référence temporelle du premier dispositif, et un deuxième intervalle de temps permettant au second dispositif d'émettre un deuxième signal en réponse au premier signal pour acquitter sa présence dans le système, le premier dispositif émettant et recevant les signaux par l'intermédiaire d'un système antennaire comportant au moins un nombre N d'antennes sectorielles avec N supérieur ou égal à quatre et une antenne omnidirectionnelle, caractérisé en ce que le procédé comporte les étapes exécutées par le premier dispositif de :
- obtention, dans un mode d'acquisition, pour chaque antenne du système antennaire, d'une première information représentative d'une qualité de communication entre l'antenne et le second dispositif;
- sélection, à partir des premières informations représentatives d'une qualité de communication obtenues, de l'antenne dont la première information représentative de la qualité de communication est la plus élevée, pour transmettre et/ou recevoir des données avec le dispositif mobile,
- obtention, dans un mode dit de poursuite, si l'antenne sélectionnée est une antenne sectorielle, pour l'antenne omnidirectionnelle et pour chaque antenne d'un groupe de M antennes sectorielles comprenant l'antenne sectorielle sélectionnée, avec M strictement inférieur à N, d'une seconde information représentative d'une qualité de communication entre l'antenne et le second dispositif ;
- sélection, à partir des secondes informations représentatives d'une qualité de communication obtenues, de l'antenne dont la seconde information représentative de la qualité de communication est la plus élevée, pour transmettre et/ou recevoir des données avec le dispositif mobile ;
- obtention, dans le mode dit de poursuite, pour chaque antenne du système antennaire, d'une troisième information représentative d'une qualité de communication entre l'antenne et le second dispositif si l'antenne sélectionnée est l'antenne omnidirectionnelle ;
- sélection, à partir des troisièmes informations représentatives d'une qualité de communication obtenues, de l'antenne dont la troisième information représentative de la qualité de communication est la plus élevée, pour transmettre et/ou recevoir des données avec le dispositif mobile.

L'invention concerne aussi un dispositif de sélection d'une antenne dans un système comprenant un premier dispositif et au moins un second dispositif mobile, le système formant un réseau de communication dans lequel le premier dispositif communique le au moins un second dispositif en utilisant une technique d'accès au médium de type accès multiple à répartition dans le temps dans laquelle chaque communication se fait dans des trames, chaque trame étant divisée en une pluralité d'intervalles de temps comprenant un premier intervalle de temps permettant au premier dispositif d'émettre un premier signal à destination du second dispositif et permettant au second dispositif de se synchroniser temporellement sur une référence temporelle du premier dispositif, et un deuxième intervalle de temps permettant au second dispositif d'émettre un deuxième signal en réponse au premier signal pour acquitter sa présence dans le système, le premier dispositif émettant et recevant les signaux par l'intermédiaire d'un système antennaire comportant au moins un nombre N d'antennes sectorielles avec N supérieur ou égal à quatre et une antenne omnidirectionnelle, caractérisé en ce que le dispositif de sélection est compris dans le premier dispositif et comporte :
- des moyens d'obtention, dans un mode d'acquisition, pour chaque antenne du système antennaire, d'une première information représentative d'une qualité de communication entre l'antenne et le second dispositif ;
- des moyens de sélection, à partir des premières informations représentatives d'une qualité de communication obtenues, de l'antenne dont la première information représentative de la qualité de communication est la plus élevée, pour transmettre et/ou recevoir des données avec le dispositif mobile ;
- des moyens d'obtention, dans un mode dit de poursuite, si l'antenne sélectionnée est une antenne sectorielle, pour l'antenne omnidirectionnelle et pour chaque antenne d'un groupe de M antennes sectorielles comprenant l'antenne sectorielle sélectionnée, avec M strictement inférieur à N, d'une seconde information représentative d'une qualité de communication entre l'antenne et le second dispositif ;
- des moyens de sélection, à partir des secondes informations représentatives d'une qualité de communication obtenues, de l'antenne dont la seconde information représentative de la qualité de communication est la plus élevée, pour transmettre et/ou recevoir des données avec le dispositif mobile,
- des moyens d'obtention, dans le mode dit de poursuite, pour chaque antenne du système antennaire, d'une troisième information représentative d'une qualité de communication entre l'antenne et le second dispositif si l'antenne sélectionnée est l'antenne omnidirectionnelle ;
- des moyens de sélection, à partir des troisièmes informations représentatives d'une qualité de communication obtenues, de l'antenne dont la troisième information représentative de la qualité de communication est la plus élevée, pour transmettre et/ou recevoir des données avec le dispositif mobile.

L'invention concerne aussi un système de sélection d'une antenne comprenant un premier dispositif et au moins un second dispositif mobile, le système formant un réseau de communication dans lequel le premier dispositif (10) communique le au moins un second dispositif en utilisant une technique d'accès au médium de type accès multiple à répartition dans le temps dans laquelle chaque communication se fait dans des trames, chaque trame étant divisée en une pluralité d'intervalles de temps comprenant un premier intervalle de temps permettant au premier dispositif d'émettre un premier signal à destination du second dispositif et permettant au second dispositif de se synchroniser temporellement sur une référence temporelle du premier dispositif, et un deuxième intervalle de temps permettant au second dispositif d'émettre un deuxième signal en réponse au premier signal pour acquitter sa présence dans le système, le premier dispositif émettant et recevant les signaux par l'intermédiaire d'un système antennaire comportant au moins un nombre N d'antennes sectorielles avec N supérieur ou égal à quatre et une antenne omnidirectionnelle, caractérisé en ce que le système comporte :
- des moyens, compris dans le premier dispositif, d'obtention, dans un mode d'acquisition, pour chaque antenne du système antennaire, d'une première information représentative d'une qualité de communication entre l'antenne et le second dispositif ;
- des moyens, compris dans le premier dispositif, de sélection, à partir des premières informations représentatives d'une qualité de communication obtenues, de l'antenne dont la première information représentative de la qualité de communication est la plus élevée, pour transmettre et/ou recevoir des données avec le dispositif mobile ;
- des moyens, compris dans le premier dispositif, d'obtention, dans un mode dit de poursuite, si l'antenne sélectionnée est une antenne sectorielle, pour l'antenne omnidirectionnelle et pour chaque antenne d'un groupe de M antennes sectorielles comprenant l'antenne sectorielle sélectionnée, avec M strictement inférieur à N, d'une seconde information représentative d'une qualité de communication entre l'antenne et le second dispositif ;
- des moyens, compris dans le premier dispositif, de sélection, à partir des secondes informations représentatives d'une qualité de communication obtenues, de l'antenne dont la seconde information représentative de la qualité de communication est la plus élevée, pour transmettre et/ou recevoir des données avec le dispositif mobile ;
- des moyens, compris dans le premier dispositif, d'obtention, dans le mode dit de poursuite, pour chaque antenne du système antennaire, d'une troisième information représentative d'une qualité de communication entre l'antenne et le second dispositif si l'antenne sélectionnée est l'antenne omnidirectionnelle ;
- des moyens, compris dans le premier dispositif, de sélection, à partir des troisièmes informations représentatives d'une qualité de communication obtenues, de l'antenne dont la troisième information représentative de la qualité de communication est la plus élevée, pour transmettre et/ou recevoir des données avec le dispositif mobile ;
- deux voies de réception, comprises dans le premier dispositif, l'antenne omnidirectionnelle étant reliée alternativement à l'une ou l'autre des voies de réception ;
- deux voies de réception, comprises dans le second dispositif.

Ainsi, la présente invention améliore le suivi d'un dispositif mobile en sélectionnant de manière rapide et fiable l'antenne pour échanger des données entre un premier dispositif et un second dispositif mobile.

Selon un mode de réalisation, le premier dispositif :
- vérifie si la première information représentative de la qualité de communication la plus élevée est inférieure à un seuil prédéterminé,
et le premier dispositif reste dans le mode d'acquisition tant que la première information représentative de la qualité de communication la plus élevée est inférieure à un seuil prédéterminé.

Selon un mode de réalisation, le premier dispositif :
- vérifie si la seconde ou la troisième information représentative de la qualité de communication la plus élevée est inférieure à un seuil prédéterminé,
et le premier dispositif passe dans le mode d'acquisition si la seconde information représentative de la qualité de communication la plus élevée est inférieure au seuil prédéterminé.

Selon un mode de réalisation, N est égal à six, M est égal à trois et, le groupe d'antennes comprend les antennes sectorielles adjacentes à l'antenne sectorielle sélectionnée.

Selon un mode de réalisation, le premier dispositif comporte deux voies de réception et l'antenne omnidirectionnelle est reliée alternativement à l'une ou l'autre des voies de réception.

L'invention concerne aussi un programme d'ordinateur, caractérisé en ce qu'il comprend des instructions pour mettre en oeuvre, par un dispositif, le procédé selon le premier aspect, lorsque ledit programme est exécuté par un processeur dudit dispositif. L'invention concerne aussi des moyens de stockage, caractérisés en ce qu'ils stockent un programme d'ordinateur comprenant des instructions pour mettre en oeuvre, par un dispositif, le procédé selon le premier aspect lorsque ledit programme est exécuté par un processeur dudit dispositif.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un système selon l'invention ;
[Fig. 2] illustre schématiquement la répartition des antennes dans un plan ;
[Fig. 3] illustre schématiquement un module de traitement compris dans une station de commande ;
[Fig. 4] illustre schématiquement un module de traitement compris dans un dispositif mobile;
[Fig. 5] illustre schématiquement un schéma bloc de l'interface de communication de la station de commande ;
[Fig. 6] illustre schématiquement un schéma bloc de l'interface de communication compris dans le dispositif mobile ;
[Fig. 7] illustre schématiquement une trame selon la présente invention ;
[Fig. 8] illustre schématiquement un procédé de sélection d'une antenne mis en oeuvre par une station de commande dans un mode dit d'acquisition selon la présente invention ;
[Fig. 9] illustre schématiquement un procédé de génération d'un signal de synchronisation mis en oeuvre par une station de commande selon la présente invention ;
[Fig. 10] illustre schématiquement un procédé de sélection d'une antenne mis en oeuvre par une station de commande dans un mode dit de poursuite selon la présente invention.

### EXPOSE DETAILLE DE MODES DE REALISATION

L'invention est décrite par la suite dans un contexte de système comprenant une station de commande et un dispositif mobile. La présente invention est bien entendu aussi applicable dans le cas où la station de commande communique avec une pluralité de dispositifs mobiles.

La station de commande comporte un système antennaire comprenant une pluralité d'antennes adressant chacune un secteur prédéfini et le dispositif mobile comporte deux antennes. Bien entendu, la présente invention est aussi applicable lorsque le dispositif mobile ne comporte qu'une unique antenne.

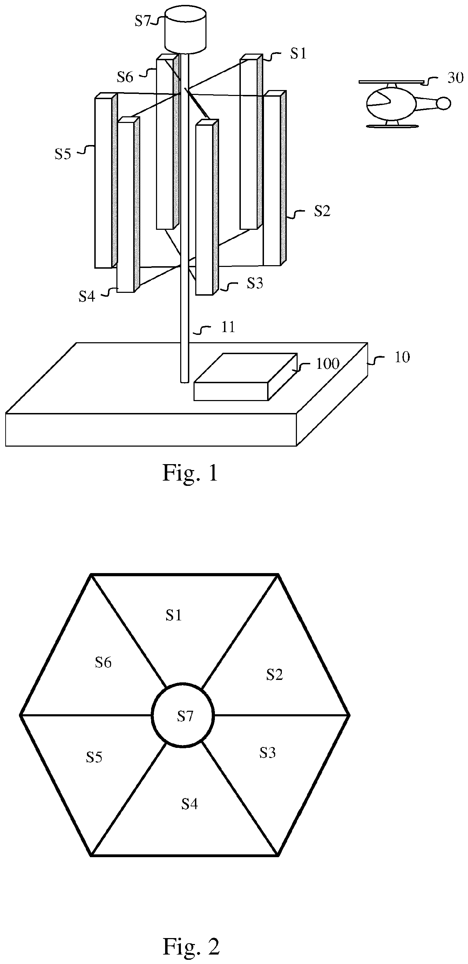

La Fig. 1 illustre schématiquement un exemple de système selon l'invention.

Dans l'exemple de la Fig. 1, un système 1 comprend une station de commande 10 permettant de contrôler simultanément un dispositif mobile 30 tel qu'un drone.

La station de commande 10 comprend un système antennaire 11 comprenant une pluralité d'antennes. La station de commande 10 comprend un module de traitement 100 apte à mettre en oeuvre le procédé selon l'invention. Dans l'exemple de la Fig. 1, le système antennaire 11 comporte six antennes sectorielles S1, S2, S3, S4, S5 et S6 et une antenne omnidirectionnelle S7. Chaque antenne sectorielle permet de couvrir à « - 3dB » un azimut de « 60° » et une élévation de « +12,5° ». L'antenne omnidirectionnelle 12 permet de couvrir à « -3dB » un azimut de « 360° » et de « +90° » en élévation. L'antenne omnidirectionnelle S7 sert à faible distance pour des passages du dispositif mobile 30 au-dessus du système antennaire 11 de la station de commande 10.

Le dispositif mobile 30 comprend un système antennaire (non représenté) comprenant deux antennes omnidirectionnelles (non représentées).

Le système 1 décrit en relation avec la Fig. 1 forme un réseau de communication dans lequel la station de commande 10 communique avec le dispositif mobile 30. La station de commande 10 et le dispositif mobile 30 échangent notamment des données de contrôle dans le sens station de commande 10 vers le dispositif mobile 30 et des données d'observation dans le sens dispositif mobile 30 vers la station de commande 10.

Dans le système 1, la station de commande 10 et le dispositif mobile 30 utilisent une technique d'accès au médium de type accès multiple à répartition dans le temps (TDMA : « Time division multiple access » en terminologie anglo-saxonne) dans laquelle chaque communication de données se fait dans une ou plusieurs trames. Cette technique d'accès au médium nécessite une synchronisation temporelle au niveau de chaque noeud du réseau de communication (i.e. au niveau de la station de commande 10 et du dispositif mobile 30 pour éviter tout chevauchement temporel. Le réseau de communication de la Fig. 1 utilise une topologie centralisée dans laquelle la station de commande 10 agit comme un noeud *maître,* c'est-à-dire que la station de commande 10 cadence temporellement l'ensemble du réseau. Le dispositif mobile 30 est *esclave* du noeud maître et se cale temporellement sur une référence temporelle donnée par le noeud maître.

La Fig. 2 illustre schématiquement la répartition des antennes dans un plan.

Dans l'exemple de la Fig. 2, les antennes S6, S2 et S7 sont adjacentes de l'antenne S1, les antennes S1, S3 et S7 sont adjacentes de l'antenne S2, les antennes S2, S4 et S7 sont adjacentes de l'antenne S3, les antennes S3, S5 et S7 sont adjacentes de l'antenne S4, les antennes S4, S6 et S7 sont adjacentes de l'antenne S5, les antennes S5, S1 et S7 sont adjacentes de l'antenne S6 et les antennes S1 à S6 sont adjacentes de l'antenne S7.

Des antennes sont adjacentes lorsque leurs secteurs respectifs sont adjacents.

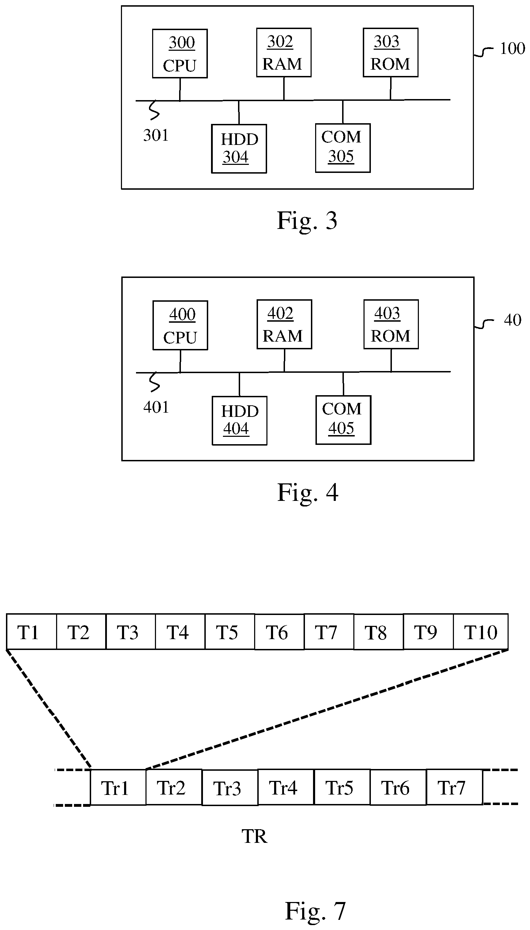

La Fig. 3 illustre schématiquement un module de traitement compris dans une station de commande.

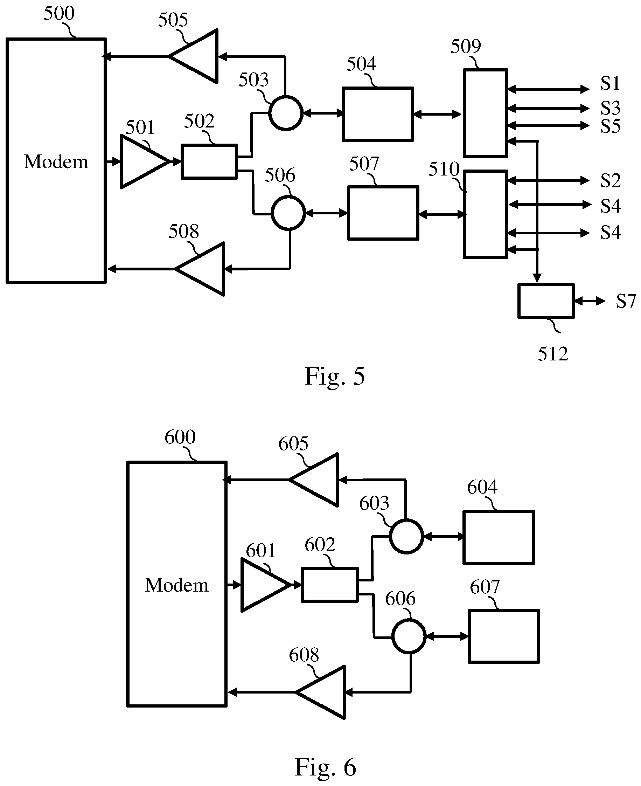

Selon l'exemple d'architecture matérielle représenté à la Fig. 3, le module de traitement 100 comprend alors, reliés par un bus de communication 301 : un processeur ou CPU (« Central Processing Unit » en anglais) 300 ; une mémoire vive RAM (« Random Access Memory » en anglais) 302 ; une mémoire morte ROM (« Read Only Memory » en anglais) 303 ; une unité de stockage telle qu'un disque dur ou un lecteur de support de stockage, tel qu'un lecteur de cartes SD (« Secure Digital » en anglais) 304 ; au moins une interface de communication 305 permettant au module de traitement 100 de communiquer avec d'autres modules ou dispositifs. Par exemple, l'interface de communication 305 permet au module de traitement 100 de communiquer avec d'autres modules de la station de commande 10 tels qu'un module de commutation d'antenne permettant de sélectionner une antenne à utiliser à un instant donné ou avec le dispositif mobile 30. L'interface de communication sera décrite en détail en référence à la Fig. 5.

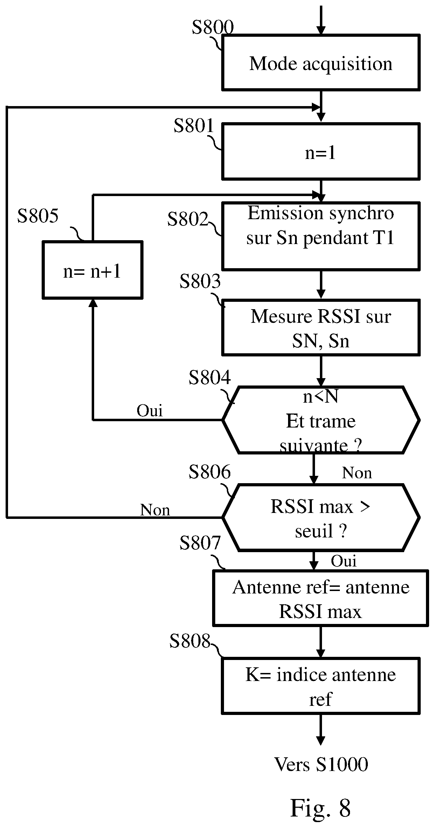

Le processeur 300 est capable d'exécuter des instructions chargées dans la RAM 302 à partir de la ROM 303, d'une mémoire externe (non représentée), d'un support de stockage (tel qu'une carte SD), ou d'un réseau de communication. Lorsque le module de commande 100 est mis sous tension, le processeur 300 est capable de lire de la RAM 302 des instructions et de les exécuter. Dans un mode de réalisation, ces instructions forment un programme d'ordinateur causant la mise en oeuvre complète ou partielle, par le processeur 300, du procédé décrit ci-après en relation avec les Figs. 8, 9 et 10.

Les procédés décrits en relation avec les Figs. 8, 9 et 10 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La Fig. 4 illustre schématiquement un module de traitement compris dans un dispositif mobile.

Selon l'exemple d'architecture matérielle représenté à la Fig. 4, le module de traitement 40 comprend, reliés par un bus de communication 401 : un processeur ou CPU (« Central Processing Unit » en anglais) 400 ; une mémoire vive RAM (« Random Access Memory » en anglais) 402 ; une mémoire morte ROM (« Read Only Memory » en anglais) 403 ; une unité de stockage telle qu'un disque dur ou un lecteur de support de stockage, tel qu'un lecteur de cartes SD (« Secure Digital » en anglais) 404 ; au moins une interface de communication 405 permettant au module de traitement 40 de communiquer avec d'autres modules ou dispositifs. Par exemple, l'interface de communication 405 permet au module de traitement 40 de communiquer avec d'autres modules tels qu'un module de commutation d'antenne permettant de sélectionner une antenne à utiliser à un instant donné ou avec la station de commande 10.

Le processeur 400 est capable d'exécuter des instructions chargées dans la RAM 402 à partir de la ROM 402, d'une mémoire externe (non représentée), d'un support de stockage (tel qu'une carte SD), ou d'un réseau de communication. Lorsqu'un dispositif mobile 30 est mis sous tension, le processeur 400 est capable de lire de la RAM 3002 des instructions et de les exécuter.

La Fig. 5 illustre schématiquement un schéma bloc de l'interface de communication de la station de commande.

L'interface de communication 305 comporte un modem 500, des amplificateurs 501, 505 et 508, des commutateurs 502 et 512, des circulateurs 503 et 506, des filtres 504 et 507 et des commutateurs RF 509 et 510.

La voie émission du modem 500 est amplifiée par l'amplificateur 501. La sortie de l'amplificateur 501 est reliée au commutateur 502. Une première sortie du commutateur 502 est reliée à une première entrée/sortie du circulateur 503 et une seconde sortie du commutateur 502 est reliée à une première entrée/sortie du circulateur 506.

Une seconde entrée/sortie du circulateur 503 est reliée à un amplificateur 505 dont la sortie est reliée à une première voie de réception du modem 500.

Une troisième entrée/sortie du circulateur 503 est reliée au filtre radio fréquence 504 dont la sortie est reliée au commutateur RF 509.

Le commutateur 509 permet de sélectionner, parmi les antennes impaires S1, S3, S5 sectorielles et l'antenne omnidirectionnelle S7, l'antenne utilisée pour la transmission et/ou la réception de trames et/ou de sélectionner l'antenne sur laquelle des mesures de RSSI (indication de force d'un signal reçu : « Received Signal Strength Indication » en terminologie anglo-saxonne) sont effectuées.

Une seconde entrée/sortie du circulateur 506 est reliée à un amplificateur 508 dont la sortie est reliée à une seconde voie de réception du modem 500.

Une troisième entrée/sortie du circulateur 506 est reliée au filtre radio fréquence 507 dont la sortie est reliée au commutateur 510.

Le commutateur 510 permet de sélectionner, parmi les antennes sectorielles paires S2, S4 et S6 et l'antenne omnidirectionnelle S7, l'antenne utilisée pour la transmission et/ou la réception de trames et/ou de sélectionner l'antenne sur laquelle des mesures de RSSI (indication de force d'un signal reçu : « Received Signal Strength Indication » en terminologie anglo-saxonne) sont effectuées.

Le commutateur 512 est relié à l'antenne omnidirectionnelle S7 et permet de relier l'antenne omnidirectionnelle S7 soit au commutateur 509, soit au commutateur 510. Ainsi, l'interface de communication 305 dispose d'une voie d'émission qui peut utiliser l'une quelconque des antennes S1 à S7 et de deux canaux de réception simultanés.

Les deux canaux de réception permettent d'effectuer deux mesures de RSSI différentes dans un même intervalle de temps dans un mode particulier de réalisation, de combiner les données reçues par les deux canaux pour améliorer la qualité de réception des données.

La Fig. 6 illustre schématiquement un schéma bloc de l'interface de communication du dispositif mobile.

L'interface de communication 405 comporte un modem 600, des amplificateurs 601, 605 et 608, un commutateur 602, des circulateurs 603 et 606 et des filtres 604 et 607.

La voie émission du modem 600 est amplifiée par l'amplificateur 601. La sortie de l'amplificateur 601 est reliée au commutateur 602. Une première sortie du commutateur 602 est reliée à une première entrée/sortie circulateur 603 et une seconde sortie du commutateur 602 est reliée à une première entrée/sortie du circulateur 606. Une seconde entrée/sortie du circulateur 603 est reliée à un amplificateur 605 dont la sortie est reliée à une première voie de réception du modem 600.

Une troisième entrée/sortie du circulateur 603 est reliée au filtre radio fréquence 604 dont la sortie est reliée à une première antenne non représentée.

Une seconde entrée/sortie du circulateur 606 est reliée à un amplificateur 608 dont la sortie est reliée à une seconde voie de réception du modem 600.

Une troisième entrée/sortie du circulateur 606 est reliée au filtre radio fréquence 607 dont la sortie est reliée à une seconde antenne non représentée.

Ainsi, l'interface de communication 405 dispose d'une voie d'émission qui peut utiliser une antenne parmi deux et de deux canaux de réception simultanés.

Les deux canaux de réception permettent de combiner les données reçues par les deux canaux pour améliorer la qualité de réception des données.

La Fig. 7 illustre schématiquement une organisation de trames selon l'invention.

Les trames utilisées dans le système sont organisées en une succession de groupes de trames consécutives. Un seul groupe de trames est représenté en Fig. 7. Le groupe de trames comprend un nombre de trames égal au nombre d'antennes du système antennaire 11 de la station de commande, sept dans le présent exemple de réalisation, multiplié par le nombre de dispositifs mobiles présents dans le système. Le groupe de trames comprend les trames notées Tr1 à Tr7.

La Fig. 7 donne un détail de la trame Tr1 comprise dans le groupe de trames, toutes les trames utilisées dans le système ayant une structure de trame identique. La trame Tr1 est divisée en une pluralité d'intervalles de temps T1 à T10 (« timeslot » en terminologie anglo-saxonne). La pluralité d'intervalles de temps comprend un premier intervalle de temps T1 permettant à la station de commande d'émettre un premier signal appelé balise (« beacon » en terminologie anglo-saxonne) permettant à chaque dispositif mobile 30 de se synchroniser sur une référence temporelle donnée par la station de commande 10. C'est grâce à cette balise que le ou les dispositifs mobiles peuvent se synchroniser.

La pluralité d'intervalles de temps comprend de plus un deuxième intervalle de temps T2 permettant au dispositif mobile d'émettre un second signal lui permettant ainsi d'acquitter sa présence.

Les intervalles de temps T1 et T2 sont suivis d'une succession d'intervalles de temps. Chacun des intervalles de temps de la succession d'intervalles de temps permet à un dispositif mobile prédéterminé d'émettre des données en direction de la station de commande 10 ou de recevoir des données en provenance de la station de commande 10. Chaque dispositif et la station de commande 10 partagent une information décrivant une allocation des intervalles de temps dans une trame. L'information décrivant l'allocation prend la forme d'une table d'allocation partagée par tous les noeuds du réseau. Cette table d'allocation peut être fixe ou être mise à jour de manière synchrone dans tous les noeuds du réseau.

Ainsi, chaque dispositif mobile 30 sait dans quel intervalle de temps d'une trame il doit émettre en direction de la station de commande 10 et dans quel intervalle de temps d'une trame il peut recevoir des données en provenance de la station de commande 10. De même, la station de commande 10 sait dans quel intervalle de temps d'une trame elle peut émettre des données en direction d'un dispositif mobile donné et dans quel intervalle de temps d'une trame elle peut recevoir des données en provenance du dispositif mobile donné. Par exemple, dans la Fig. 7, lorsque le dispositif mobile 30 est détecté par la station de commande, l'intervalle de temps T3 est affecté au dispositif mobile 30 pour l'émission de données et l'intervalle de temps T4 est affecté au dispositif mobile 30 pour la réception de données.

La Fig. 8 illustre schématiquement un procédé de sélection d'une antenne mis en oeuvre par une station de commande dans un mode dit d'acquisition selon la présente invention.

Le procédé décrit en relation avec la Fig. 8 est mis en oeuvre par le module de traitement 100. Ce procédé est un procédé synchrone car il suit la cadence des trames du système donnée par la station de commande 10. Pour un groupe de trames, dit groupe de trames courant, le procédé se déroule comme décrit ci-après.

Le procédé est par exemple exécuté périodiquement lorsqu'aucun dispositif n'est détecté dans un des secteurs des antennes S1 à S7 ou lorsqu'on souhaite tenter de déterminer si un autre dispositif mobile apparaît dans un des secteurs des antennes S1 à S7.

Chaque dispositif mobile 30 déclaré dans la table d'allocation des intervalles de temps possède deux états : Acquisition ou Poursuite. Les algorithmes d'acquisition et de poursuite s'appliquent donc pour chacun des dispositifs mobiles 30 et de manière indépendante les uns des autres.

A l'étape S800, le module de traitement 100 se met dans un mode dit d'acquisition. Le mode d'acquisition est mis en oeuvre pour découvrir un dispositif mobile qui apparaît dans un des secteurs des six antennes sectorielles S1, S2, S3, S4, S5 et S6 et de l'antenne omnidirectionnelle S7 ou pour tenter de rétablir une communication avec un dispositif mobile 30 qui n'a pas répondu ou effectué un acquittement dans un intervalle de temps.

A l'étape S801, le module de traitement 100 initialise une variable n à la valeur 1. La variable n varie de 1 à N, où N est le nombre d'antennes du système antennaire 11. N est supérieur ou égal à 4, par exemple N est égal à 7.

A l'étape suivante S802, le module de traitement 100 commande l'émission d'un signal de synchronisation pendant un intervalle de temps, par exemple T1 d'une trame. Le signal de synchronisation est émis par l'antenne Sn.

A l'étape suivante S803, le module de traitement obtient une information représentative de la qualité de transmission pendant l'intervalle de temps T2, telle qu'une mesure de RSSI, entre un éventuel dispositif mobile 30 et l'antenne Sn et une information représentative de la qualité de transmission, telle qu'une mesure de RSSI, entre un éventuel dispositif mobile 30 et l'antenne SN. La mesure de RSSI est par exemple effectuée pendant toute la durée de l'intervalle de temps T2. Chacune des deux informations représentatives de la qualité de transmission est mémorisée en association avec une information représentative de l'antenne pour laquelle l'information a été obtenue.

Selon la présente invention, l'antenne omnidirectionnelle S7 peut être utilisée en émission et/ou en réception grâce à la possibilité offerte par l'interrupteur 512 de la relier au commutateur 509 ou 510.

Ainsi, il est possible d'utiliser les deux voies de réception pour déterminer simultanément les deux informations représentatives de la qualité de transmission dans un même intervalle de temps.

A l'étape suivante S804, le module de traitement 100 vérifie si la variable n est inférieure au nombre N et si le temps total correspondant à une trame est écoulé.

Dans l'affirmative, le module de traitement 100 passe à l'étape S805. Dans la négative, le module de traitement 100 passe à l'étape S806.

A l'étape S805, le module de traitement 100 incrémente la variable n d'une unité et retourne à l'étape S802.

Il est à remarquer ici que l'antenne omnidirectionnelle est, lorsque la variable n est impaire, reliée au commutateur 510 et, lorsque la variable n est paire, reliée au commutateur 509.

A l'étape S806, le module de traitement 100 vérifie si l'information représentative de la qualité de transmission la plus importante parmi les informations représentatives de la qualité de transmission est supérieure à un seuil prédéterminé. Ce seuil prédéterminé est défini comme seuil minimal de réception.

Dans l'affirmative, le module de traitement 100 passe à l'étape S807. Dans la négative, le module de traitement 100 retourne à l'étape S801.

A l'étape S807, le module de traitement 100 sélectionne l'antenne pour laquelle l'information représentative de la qualité de transmission est la plus importante et affecte, à l'étape S808, l'indice de l'antenne sélectionnée à une variable K. Cette antenne est ainsi considérée comme antenne de référence.

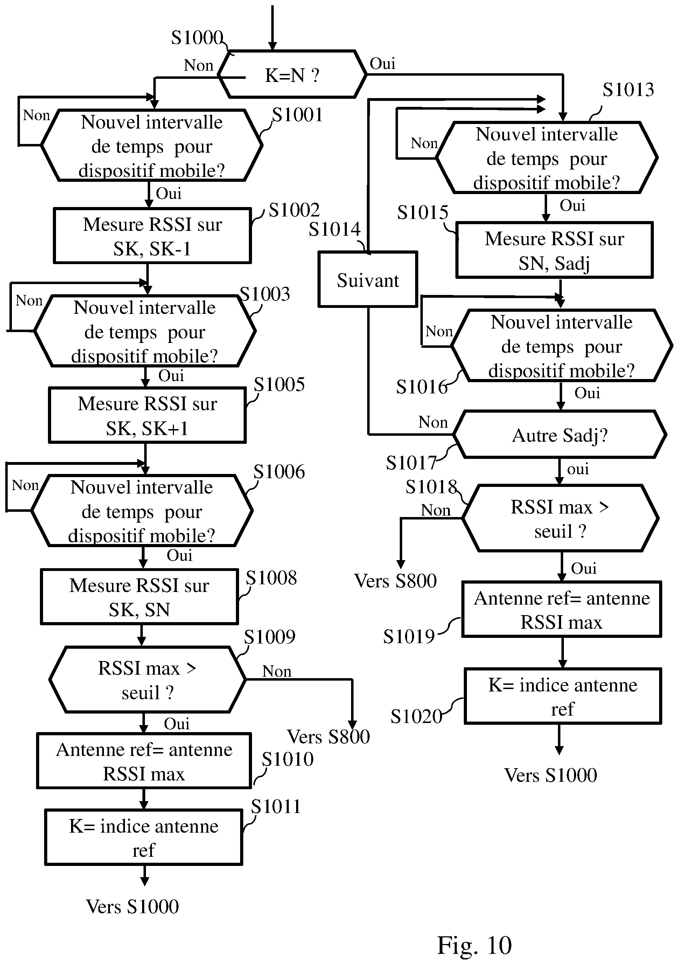

Cette opération effectuée, le module de traitement 100 interrompt le présent algorithme pour lancer l'exécution de l'algorithme décrit en référence à la Fig. 10. Ainsi, N trames sont nécessaires pour l'exécution du présent algorithme.

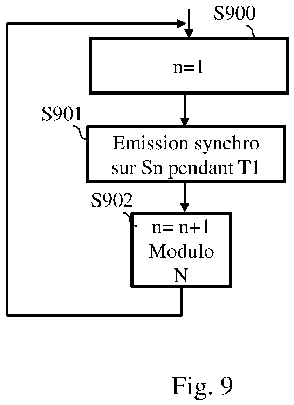

La Fig. 9 illustre schématiquement un procédé de génération d'un signal de synchronisation mis en oeuvre par une station de commande selon la présente invention.

Le présent algorithme est exécuté en permanence quel que soit le mode d'acquisition ou de poursuite en parallèle de l'algorithme tel que décrit en référence à la Fig. 8 et de l'algorithme qui sera décrit en référence à la Fig. 10.

A l'étape S900, le module de traitement 100 met la variable n à la valeur 1.

A l'étape suivante S901, le module de traitement 100 commande l'émission d'un signal de synchronisation pendant un intervalle de temps T1 d'une trame. Le signal de synchronisation est émis par l'antenne Sn.

A l'étape suivante S902, le module de traitement 100 incrémente la valeur de la variable n d'une unité modulo N.

A la fin de la trame, le module de traitement retourne à l'étape S900.

La Fig. 10 illustre schématiquement un procédé de sélection d'une antenne mis en oeuvre par une station de commande dans un mode dit de poursuite selon la présente invention.

Le procédé tel que décrit dans la Fig. 10 est exécuté à la suite de l'étape S808 de la Fig. 8.

A l'étape S1000, le module de traitement 100 vérifie si la variable K est à la valeur N, représentative de l'indice de l'antenne omnidirectionnelle S7.

Dans la négative, cas correspondant à une antenne sectorielle, le module de traitement 100 passe à l'étape S1001. Dans l'affirmative, le module de traitement 100 passe à l'étape S1013.

A l'étape S1001, le module de traitement 100 attend le début d'un nouvel intervalle de temps alloué en réception au dispositif mobile.

A l'étape suivante S1002, le module de traitement 100 obtient, pendant l'intervalle de temps alloué au dispositif mobile, une information représentative de la qualité de transmission, telle qu'une mesure de RSSI, entre le dispositif mobile 30 et l'antenne SK et, dans le même intervalle de temps alloué au dispositif mobile, une information représentative de la qualité de transmission, telle qu'une mesure de RSSI, entre le dispositif mobile 30 et l'antenne SK-1. La mesure de RSSI est effectuée pendant toute la durée de l'intervalle de temps alloué au dispositif mobile 30 pour émettre des données.

A l'étape suivante S1003, le module de traitement 100 attend le début d'un nouvel intervalle de temps alloué en réception au dispositif mobile.

Au début d'un nouvel intervalle de temps alloué en réception pour le dispositif mobile, le module de traitement 100 passe à l'étape S1005.

A l'étape suivante S1005, le module de traitement 100 obtient, pendant l'intervalle de temps alloué au dispositif mobile, une information représentative de la qualité de transmission, telle qu'une mesure de RSSI, entre le dispositif mobile 30 et l'antenne SK et, dans le même intervalle de temps alloué au dispositif mobile, une information représentative de la qualité de transmission, telle qu'une mesure de RSSI, entre le dispositif mobile 30 et l'antenne SK+1. La mesure de RSSI est effectuée pendant toute la durée de l'intervalle de temps alloué au dispositif mobile 30 pour émettre des données.

A l'étape suivante S1006, le module de traitement 100 attend le début d'un nouvel intervalle de temps alloué en réception au dispositif mobile.

Au début d'un nouvel intervalle de temps alloué en réception au dispositif mobile, le module de traitement 100 passe à l'étape S 1008.

A l'étape suivante S1008, le module de traitement 100 obtient, pendant l'intervalle de temps alloué au dispositif mobile, une information représentative de la qualité de transmission, telle qu'une mesure de RSSI, entre le dispositif mobile 30 et l'antenne SK et, dans le même intervalle de temps alloué au dispositif mobile, une information représentative de la qualité de transmission, telle qu'une mesure de RSSI, entre le dispositif mobile 30 et l'antenne SN. La mesure de RSSI est effectuée pendant toute la durée de l'intervalle de temps alloué au dispositif mobile 30 pour émettre des données. A l'étape S1009, le module de traitement 100 vérifie si l'information représentative de la qualité de transmission obtenue la plus importante parmi les informations représentatives de la qualité de transmission obtenues est supérieure à un seuil prédéterminé. Ce seuil prédéterminé est défini comme seuil minimal de réception. Dans l'affirmative, le module de traitement 100 passe à l'étape S1010. Dans la négative, le module de traitement 100 interrompt le présent algorithme et retourne à l'étape S800 de la Fig. 8 dans le mode d'acquisition.

A l'étape S1010, le module de traitement 100 sélectionne l'antenne pour laquelle l'information représentative de la qualité de transmission est la plus importante et affecte, à l'étape S1011, à la variable K l'indice de l'antenne sélectionnée. Cette antenne est ainsi considérée comme antenne de référence.

Cette opération effectuée, le module de traitement 100 retourne à l'étape S1000. Ainsi, trois trames seulement sont nécessaires dans le mode poursuite lorsque l'antenne sélectionnée est une antenne sectorielle.

A l'étape S1013, cas correspondant à l'antenne omnidirectionnelle, le module de traitement 100 attend le début d'un nouvel intervalle de temps alloué en réception au dispositif mobile.

A l'étape suivante S1015, le module de traitement 100 obtient, pendant l'intervalle de temps alloué au dispositif mobile, une information représentative de la qualité de transmission, telle qu'une mesure de RSSI, entre le dispositif mobile 30 et l'antenne SK et, dans le même intervalle de temps alloué au dispositif mobile, une information représentative de la qualité de transmission, telle qu'une mesure de RSSI, entre le dispositif mobile 30 et l'antenne Sadj. La mesure de RSSI est effectuée pendant toute la durée de l'intervalle de temps alloué au dispositif mobile 30 pour émettre des données.

Adj est représentatif de l'indice de l'antenne adjacente de l'antenne SN. Ainsi, la variable adj varie de 1 à N-1, l'antenne SN étant omnidirectionnelle, les antennes sectorielles sont toutes adjacentes de l'antenne omnidirectionnelle SN.

A l'étape suivante S1016, le module de traitement 100 attend le début d'un nouvel intervalle de temps alloué en réception au dispositif mobile.

A l'étape S 1017, le module de traitement 100 vérifie si toutes les antennes adjacentes ont été traitées.

Dans l'affirmative, le module de traitement 100 passe à l'étape S 1018, dans la négative le module de traitement passe à l'étape S 1014 et sélectionne une autre antenne adjacente qui n'a pas été traitée.

A l'étape S1018, le module de traitement 100 vérifie si l'information représentative de la qualité de transmission la plus importante parmi les informations représentatives de la qualité de transmission est supérieure à un seuil prédéterminé. Ce seuil prédéterminé est défini comme seuil minimal de réception.

Dans l'affirmative, le module de traitement 100 passe à l'étape S1019. Dans la négative, le module de traitement 100 interrompt le présent algorithme et retourne à l'étape S800 de l'algorithme de la Fig. 8 dans le mode acquisition.

A l'étape S1019, le module de traitement 100 sélectionne l'antenne pour laquelle l'information représentative de la qualité de transmission est la plus importante et affecte, à l'étape S1020, à la variable K l'indice de l'antenne sélectionnée. Cette antenne est ainsi considérée comme antenne de référence.

Cette opération effectuée, le module de traitement 100 retourne à l'étape S1000. Ainsi, N-1 trames seulement sont nécessaires dans le mode poursuite lorsque l'antenne sélectionnée est une antenne omnidirectionnelle.

Il est à remarquer ici que le module de traitement 100 prend en compte le fait que les secteurs couverts par une antenne du système antennaire 11 est un lobe se chevauchant avec des lobes d'antennes voisines. Dans ce cas, le module de traitement 100 applique une hystérésis pour éviter de trop nombreux changements d'antennes.

## Revendications

1. Procédé de sélection d'une antenne dans un système comprenant un premier dispositif (10) et au moins un second dispositif mobile (30), le système formant un réseau de communication dans lequel le premier dispositif (10) communique le au moins un second dispositif (30) en utilisant une technique d'accès au médium de type accès multiple à répartition dans le temps dans laquelle chaque communication se fait dans des trames, chaque trame étant divisée en une pluralité d'intervalles de temps comprenant un premier intervalle de temps permettant au premier dispositif (10) d'émettre un premier signal à destination du second dispositif et permettant au second dispositif de se synchroniser temporellement sur une référence temporelle du premier dispositif (10), et un deuxième intervalle de temps permettant au second dispositif d'émettre un deuxième signal en réponse au premier signal pour acquitter sa présence dans le système, le premier dispositif émettant et recevant les signaux par l'intermédiaire d'un système antennaire comportant au moins un nombre N d'antennes sectorielles avec N supérieur ou égal à quatre et une antenne omnidirectionnelle, **caractérisé en ce que** le procédé comporte les étapes exécutées par le premier dispositif de :
- obtention, dans un mode d'acquisition, pour chaque antenne du système antennaire, d'une première information représentative d'une qualité de communication entre l'antenne et le second dispositif ;
- sélection, à partir des premières informations représentatives d'une qualité de communication obtenues, de l'antenne dont la première information représentative de la qualité de communication est la plus élevée, pour transmettre et/ou recevoir des données avec le dispositif mobile ;
- obtention, dans un mode dit de poursuite, si l'antenne sélectionnée est une antenne sectorielle, pour l'antenne omnidirectionnelle et pour chaque antenne d'un groupe de M antennes sectorielles comprenant l'antenne sectorielle sélectionnée, avec M strictement inférieur à N, d'une seconde information représentative d'une qualité de communication entre l'antenne et le second dispositif ;
- sélection, à partir des secondes informations représentatives d'une qualité de communication obtenues, de l'antenne dont la seconde information représentative de la qualité de communication est la plus élevée, pour transmettre et/ou recevoir des données avec le dispositif mobile ;
- obtention, dans le mode dit de poursuite, pour chaque antenne du système antennaire, d'une troisième information représentative d'une qualité de communication entre l'antenne et le second dispositif si l'antenne sélectionnée est l'antenne omnidirectionnelle ;
- sélection, à partir des troisièmes informations représentatives d'une qualité de communication obtenues, de l'antenne dont la troisième information représentative de la qualité de communication est la plus élevée, pour transmettre et/ou recevoir des données avec le dispositif mobile.

2. Procédé selon la revendication 1, **caractérisé en ce que** le procédé comporte en outre l'étape effectuée par le premier dispositif de vérification si la première information représentative de la qualité de communication la plus élevée est inférieure à un seuil prédéterminé, et **en ce que** le premier dispositif reste dans le mode d'acquisition tant que la première information représentative de la qualité de communication la plus élevée est inférieure à un seuil prédéterminé.

3. Procédé selon l'une quelconque des revendications précédentes, **caractérisé en ce que** le procédé comporte en outre l'étape effectuée par le premier dispositif de vérification si la seconde ou la troisième information représentative de la qualité de communication la plus élevée est inférieure à un seuil prédéterminé, et **en ce que** le premier dispositif passe dans le mode d'acquisition si la seconde information représentative de la qualité de communication la plus élevée est inférieure au seuil prédéterminé.

4. Procédé selon l'une quelconque des revendications précédentes, **caractérisé en ce que** N est égal à six, M est égal à trois et, le groupe d'antennes comprend les antennes sectorielles adjacentes à l'antenne sectorielle sélectionnée.

5. Procédé selon l'une quelconque des revendications précédentes, **caractérisé en ce que** le premier dispositif comporte deux voies de réception et **en ce que** l'antenne omnidirectionnelle est reliée alternativement à l'une ou l'autre des voies de réception.

6. Dispositif de sélection d'une antenne pour un système (1) comprenant un premier dispositif (10) et au moins un second dispositif mobile (30), le système formant un réseau de communication dans lequel le premier dispositif (10) communique le au moins un second dispositif (30) en utilisant une technique d'accès au médium de type accès multiple à répartition dans le temps dans laquelle chaque communication se fait dans des trames, chaque trame étant divisée en une pluralité d'intervalles de temps comprenant un premier intervalle de temps permettant au premier dispositif (10) d'émettre un premier signal à destination du second dispositif et permettant au second dispositif de se synchroniser temporellement sur une référence temporelle du premier dispositif (10), et un deuxième intervalle de temps permettant au second dispositif d'émettre un deuxième signal en réponse au premier signal pour acquitter sa présence dans le système, le premier dispositif émettant et recevant les signaux par l'intermédiaire d'un système antennaire comportant au moins un nombre N d'antennes sectorielles avec N supérieur ou égal à quatre et une antenne omnidirectionnelle, **caractérisé en ce que** le dispositif de sélection est compris dans le premier dispositif et comporte :
- des moyens d'obtention, dans un mode d'acquisition, pour chaque antenne du système antennaire, d'une première information représentative d'une qualité de communication entre l'antenne et le second dispositif ;
- des moyens de sélection, à partir des premières informations représentatives d'une qualité de communication obtenues, de l'antenne dont la première information représentative de la qualité de communication est la plus élevée, pour transmettre et/ou recevoir des données avec le dispositif mobile ;
- des moyens d'obtention, dans un mode dit de poursuite, si l'antenne sélectionnée est une antenne sectorielle, pour l'antenne omnidirectionnelle et pour chaque antenne d'un groupe de M antennes sectorielles comprenant l'antenne sectorielle sélectionnée, avec M strictement inférieur à N, d'une seconde information représentative d'une qualité de communication entre l'antenne et le second dispositif ;
- des moyens de sélection, à partir des secondes informations représentatives d'une qualité de communication obtenues, de l'antenne dont la seconde information représentative de la qualité de communication est la plus élevée, pour transmettre et/ou recevoir des données avec le dispositif mobile ;
- des moyens d'obtention, dans le mode dit de poursuite, pour chaque antenne du système antennaire, d'une troisième information représentative d'une qualité de communication entre l'antenne et le second dispositif si l'antenne sélectionnée est l'antenne omnidirectionnelle ;
- des moyens de sélection, à partir des troisièmes informations représentatives d'une qualité de communication obtenues, de l'antenne dont la troisième information représentative de la qualité de communication est la plus élevée, pour transmettre et/ou recevoir des données avec le dispositif mobile.

7. Système de sélection d'une antenne comprenant un premier dispositif (10) et au moins un second dispositif mobile (30), le système formant un réseau de communication dans lequel le premier dispositif (10) communique le au moins un second dispositif (30) en utilisant une technique d'accès au médium de type accès multiple à répartition dans le temps dans laquelle chaque communication se fait dans des trames, chaque trame étant divisée en une pluralité d'intervalles de temps comprenant un premier intervalle de temps permettant au premier dispositif (10) d'émettre un premier signal à destination du second dispositif et permettant au second dispositif de se synchroniser temporellement sur une référence temporelle du premier dispositif (10), et un deuxième intervalle de temps permettant au second dispositif d'émettre un deuxième signal en réponse au premier signal pour acquitter sa présence dans le système, le premier dispositif émettant et recevant les signaux par l'intermédiaire d'un système antennaire comportant au moins un nombre N d'antennes sectorielles avec N supérieur ou égal à quatre et une antenne omnidirectionnelle, **caractérisé en ce que** le système comporte :
- des moyens, compris dans le premier dispositif, d'obtention, dans un mode d'acquisition, pour chaque antenne du système antennaire, d'une première information représentative d'une qualité de communication entre l'antenne et le second dispositif ;
- des moyens, compris dans le premier dispositif, de sélection, à partir des premières informations représentatives d'une qualité de communication obtenues, de l'antenne dont la première information représentative de la qualité de communication est la plus élevée, pour transmettre et/ou recevoir des données avec le dispositif mobile,
- des moyens, compris dans le premier dispositif, d'obtention, dans un mode dit de poursuite, si l'antenne sélectionnée est une antenne sectorielle, pour l'antenne omnidirectionnelle et pour chaque antenne d'un groupe de M antennes sectorielles comprenant l'antenne sectorielle sélectionnée, avec M strictement inférieur à N, d'une seconde information représentative d'une qualité de communication entre l'antenne et le second dispositif ;
- des moyens, compris dans le premier dispositif, de sélection, à partir des secondes informations représentatives d'une qualité de communication obtenues, de l'antenne dont la seconde information représentative de la qualité de communication est la plus élevée, pour transmettre et/ou recevoir des données avec le dispositif mobile,
- des moyens, compris dans le premier dispositif, d'obtention, dans le mode dit de poursuite, pour chaque antenne du système antennaire, d'une troisième information représentative d'une qualité de communication entre l'antenne et le second dispositif si l'antenne sélectionnée est l'antenne omnidirectionnelle;
- des moyens, compris dans le premier dispositif, de sélection, à partir des troisièmes informations représentatives d'une qualité de communication obtenues, de l'antenne dont la troisième information représentative de la qualité de communication est la plus élevée, pour transmettre et/ou recevoir des données avec le dispositif mobile,
- deux voies de réception, comprises dans le premier dispositif, l'antenne omnidirectionnelle étant reliée alternativement à l'une ou l'autre des voies de réception,
- deux voies de réception, comprises dans le second dispositif.

8. Programme d'ordinateur, **caractérisé en ce qu'**il comprend des instructions pour mettre en oeuvre, par un dispositif, le procédé selon l'une quelconque des revendications 1 à 5, lorsque ledit programme est exécuté par un processeur dudit dispositif.

9. Moyens de stockage, **caractérisés en ce qu'**ils stockent un programme d'ordinateur comprenant des instructions pour mettre en oeuvre, par un dispositif, le procédé selon l'une quelconque des revendications 1 à 5, lorsque ledit programme est exécuté par un processeur dudit dispositif.

## Patentansprüche

1. Verfahren zur Auswahl einer Antenne in einem System, das eine erste Vorrichtung (10) und wenigstens eine zweite, mobile Vorrichtung (30) umfasst, wobei das System ein Kommunikationsnetz bildet, in dem die erste Vorrichtung (10) mit der wenigstens einen zweiten Vorrichtung (30) unter Verwendung einer Medienzugriffstechnik vom Zeitmultiplextyp kommuniziert, wobei jede Kommunikation in Frames erfolgt, wobei jeder Frame in eine Mehrzahl von Zeitintervallen aufgeteilt ist, die ein erstes Zeitintervall, das es der ersten Vorrichtung (10) ermöglicht, ein erstes Signal an die zweite Vorrichtung zu senden, und es der zweiten Vorrichtung ermöglicht, sich zeitlich auf eine Zeitreferenz der ersten Vorrichtung (10) zu synchronisieren, und ein zweites Zeitintervall umfasst, das es der zweiten Vorrichtung ermöglicht, ein zweites Signal in Reaktion auf das erste Signal zu senden, um ihr Vorhandensein im System zu bestätigen, wobei die erste Vorrichtung die Signale mittels eines Antennensystems sendet und empfängt, das wenigstens eine Anzahl N von Sektorantennen, wobei N größer als oder gleich vier ist, und eine omnidirektionale Antenne aufweist, **dadurch gekennzeichnet, dass** das Verfahren die von der ersten Vorrichtung ausgeführten folgenden Schritte aufweist:
- Beziehen, in einem Erfassungsmodus, für jede Antenne des Antennensystems, einer ersten Information, die für eine Kommunikationsqualität zwischen der Antenne und der zweiten Vorrichtung repräsentativ ist;
- Auswählen, anhand der bezogenen ersten Informationen, die für eine Kommunikationsqualität repräsentativ sind, der Antenne, deren erste Information, die für die Kommunikationsqualität repräsentativ ist, die höchste ist, um mit der mobilen Vorrichtung Daten zu übertragen und/oder zu empfangen;
- Beziehen, in einem Verfolgungsmodus, wenn die ausgewählte Antenne eine Sektorantenne ist, für die omnidirektionale Antenne und für jede Antenne einer Gruppe von M Sektorantennen, die die ausgewählte Sektorantenne umfasst, wobei M streng kleiner als N ist, einer zweiten Information, die für eine Kommunikationsqualität zwischen der Antenne und der zweiten Vorrichtung repräsentativ ist;
- Auswählen, anhand der bezogenen zweiten Informationen, die für eine Kommunikationsqualität repräsentativ sind, der Antenne, deren zweite Information, die für die Kommunikationsqualität repräsentativ ist, die höchste ist, um mit der mobilen Vorrichtung Daten zu übertragen und/oder zu empfangen;
- Beziehen, in dem Verfolgungsmodus, für jede Antenne des Antennensystems, einer dritten Information, die für eine Kommunikationsqualität zwischen der Antenne und der zweiten Vorrichtung repräsentativ ist, wenn die ausgewählte Antenne die omnidirektionale Antenne ist;
- Auswählen, anhand der bezogenen dritten Informationen, die für eine Kommunikationsqualität repräsentativ sind, der Antenne, deren dritte Information, die für die Kommunikationsqualität repräsentativ ist, die höchste ist, um mit der mobilen Vorrichtung Daten zu übertragen und/oder zu empfangen.

2. Verfahren nach Anspruch 1, **dadurch gekennzeichnet, dass** das Verfahren ferner den Schritt aufweist, der von der ersten Überprüfungsvorrichtung durchgeführt wird, wenn die erste Information, die für die höchste Kommunikationsqualität repräsentativ ist, niedriger als eine vorbestimmte Schwelle ist, und dadurch, dass die erste Vorrichtung solange im Erfassungsmodus bleibt, wie die erste Information, die für die höchste Kommunikationsqualität repräsentativ ist, niedriger als eine vorbestimmte Schwelle ist.

3. Verfahren nach einem der vorhergehenden Ansprüche, **dadurch gekennzeichnet, dass** das Verfahren ferner den Schritt aufweist, der von der ersten Überprüfungsvorrichtung durchgeführt wird, wenn die zweite oder dritte Information, die für die höchste Kommunikationsqualität repräsentativ ist, niedriger als eine vorbestimmte Schwelle ist, und dadurch, dass die erste Vorrichtung in den Erfassungsmodus wechselt, wenn die zweite Information, die für die höchste Kommunikationsqualität repräsentativ ist, niedriger als die vorbestimmte Schwelle ist.

4. Verfahren nach einem der vorhergehenden Ansprüche, **dadurch gekennzeichnet, dass** N gleich sechs ist, M gleich drei ist und die Antennengruppe die Sektorantennen umfasst, die der ausgewählten Sektorantenne benachbart sind.

5. Verfahren nach einem der vorhergehenden Ansprüche, **dadurch gekennzeichnet, dass** die erste Vorrichtung zwei Empfangskanäle aufweist, und dadurch, dass die omnidirektionale Antenne alternativ mit dem einen oder dem anderen der Empfangskanäle verbunden ist.

6. Vorrichtung zur Auswahl einer Antenne für ein System (1), das eine erste Vorrichtung (10) und wenigstens eine zweite, mobile Vorrichtung (30) umfasst, wobei das System ein Kommunikationsnetz bildet, in dem die erste Vorrichtung (10) mit der wenigstens einen zweiten Vorrichtung (30) unter Verwendung einer Medienzugriffstechnik vom Zeitmultiplextyp kommuniziert, wobei jede Kommunikation in Frames erfolgt, wobei jeder Frame in eine Mehrzahl von Zeitintervallen aufgeteilt ist, die ein erstes Zeitintervall, das es der ersten Vorrichtung (10) ermöglicht, ein erstes Signal an die zweite Vorrichtung zu senden, und es der zweiten Vorrichtung ermöglicht, sich zeitlich auf eine Zeitreferenz der ersten Vorrichtung (10) zu synchronisieren, und ein zweites Zeitintervall umfasst, das es der zweiten Vorrichtung ermöglicht, ein zweites Signal in Reaktion auf das erste Signal zu senden, um ihr Vorhandensein im System zu bestätigen, wobei die erste Vorrichtung die Signale mittels eines Antennensystems sendet und empfängt, das wenigstens eine Anzahl N von Sektorantennen, wobei N größer als oder gleich vier ist, und eine omnidirektionale Antenne aufweist, **dadurch gekennzeichnet, dass** die Auswahlvorrichtung in der ersten Vorrichtung enthalten ist und Folgendes aufweist:
- Mittel zum Beziehen, in einem Erfassungsmodus, für jede Antenne des Antennensystems, einer ersten Information, die für eine Kommunikationsqualität zwischen der Antenne und der zweiten Vorrichtung repräsentativ ist;
- Mittel zum Auswählen, anhand der bezogenen ersten Informationen, die für eine Kommunikationsqualität repräsentativ sind, der Antenne, deren erste Information, die für die Kommunikationsqualität repräsentativ ist, die höchste ist, um mit der mobilen Vorrichtung Daten zu übertragen und/oder zu empfangen;
- Mittel zum Beziehen, in einem Verfolgungsmodus, wenn die ausgewählte Antenne eine Sektorantenne ist, für die omnidirektionale Antenne und für jede Antenne einer Gruppe von M Sektorantennen, die die ausgewählte Sektorantenne umfasst, wobei M streng kleiner als N ist, einer zweiten Information, die für eine Kommunikationsqualität zwischen der Antenne und der zweiten Vorrichtung repräsentativ ist;
- Mittel zum Auswählen, anhand der bezogenen zweiten Informationen, die für eine Kommunikationsqualität repräsentativ sind, der Antenne, deren zweite Information, die für die Kommunikationsqualität repräsentativ ist, die höchste ist, um mit der mobilen Vorrichtung Daten zu übertragen und/oder zu empfangen;
- Mittel zum Beziehen, in dem Verfolgungsmodus, für jede Antenne des Antennensystems, einer dritten Information, die für eine Kommunikationsqualität zwischen der Antenne und der zweiten Vorrichtung repräsentativ ist, wenn die ausgewählte Antenne die omnidirektionale Antenne ist;
- Mittel zum Auswählen, anhand der bezogenen dritten Informationen, die für eine Kommunikationsqualität repräsentativ sind, der Antenne, deren dritte Information, die für die Kommunikationsqualität repräsentativ ist, die höchste ist, um mit der mobilen Vorrichtung Daten zu übertragen und/oder zu empfangen.

7. System zur Auswahl einer Antenne, das eine erste Vorrichtung (10) und wenigstens eine zweite, mobile Vorrichtung (30) umfasst, wobei das System ein Kommunikationsnetz bildet, in dem die erste Vorrichtung (10) mit der wenigstens einen zweiten Vorrichtung (30) unter Verwendung einer Medienzugriffstechnik vom Zeitmultiplextyp kommuniziert, wobei jede Kommunikation in Frames erfolgt, wobei jeder Frame in eine Mehrzahl von Zeitintervallen aufgeteilt ist, die ein erstes Zeitintervall, das es der ersten Vorrichtung (10) ermöglicht, ein erstes Signal an die zweite Vorrichtung zu senden, und es der zweiten Vorrichtung ermöglicht, sich zeitlich auf eine Zeitreferenz der ersten Vorrichtung (10) zu synchronisieren, und ein zweites Zeitintervall umfasst, das es der zweiten Vorrichtung ermöglicht, ein zweites Signal in Reaktion auf das erste Signal zu senden, um ihr Vorhandensein im System zu bestätigen, wobei die erste Vorrichtung die Signale mittels eines Antennensystems sendet und empfängt, das wenigstens eine Anzahl N von Sektorantennen, wobei N größer als oder gleich vier ist, und eine omnidirektionale Antenne aufweist, **dadurch gekennzeichnet, dass** das System Folgendes umfasst:
- Mittel, die in der ersten Vorrichtung enthalten sind, zum Beziehen, in einem Erfassungsmodus, für jede Antenne des Antennensystems, einer ersten Information, die für eine Kommunikationsqualität zwischen der Antenne und der zweiten Vorrichtung repräsentativ ist;
- Mittel, die in der ersten Vorrichtung enthalten sind, zum Auswählen, anhand der bezogenen ersten Informationen, die für eine Kommunikationsqualität repräsentativ sind, der Antenne, deren erste Information, die für die Kommunikationsqualität repräsentativ ist, die höchste ist, um mit der mobilen Vorrichtung Daten zu übertragen und/oder zu empfangen,
- Mittel, die in der ersten Vorrichtung enthalten sind, zum Beziehen, in einem Verfolgungsmodus, wenn die ausgewählte Antenne eine Sektorantenne ist, für die omnidirektionale Antenne und für jede Antenne einer Gruppe von M Sektorantennen, die die ausgewählte Sektorantenne umfasst, wobei M streng kleiner als N ist, einer zweiten Information, die für eine Kommunikationsqualität zwischen der Antenne und der zweiten Vorrichtung repräsentativ ist;
- Mittel, die in der ersten Vorrichtung enthalten sind, zum Auswählen, anhand der bezogenen zweiten Informationen, die für eine Kommunikationsqualität repräsentativ sind, der Antenne, deren zweite Information, die für die Kommunikationsqualität repräsentativ ist, die höchste ist, um mit der mobilen Vorrichtung Daten zu übertragen und/oder zu empfangen,
- Mittel, die in der ersten Vorrichtung enthalten sind, zum Beziehen, im Verfolgungsmodus, für jede Antenne des Antennensystems, einer dritten Information, die für eine Kommunikationsqualität zwischen der Antenne und der zweiten Vorrichtung repräsentativ ist, wenn die ausgewählte Antenne die omnidirektionale Antenne ist;
- Mittel, die in der ersten Vorrichtung enthalten sind, zum Auswählen, anhand der bezogenen dritten Informationen, die für eine Kommunikationsqualität repräsentativ sind, der Antenne, deren dritte Information, die für die Kommunikationsqualität repräsentativ ist, die höchste ist, um mit der mobilen Vorrichtung Daten zu übertragen und/oder zu empfangen,
- zwei Empfangskanäle, die in der ersten Vorrichtung enthalten sind, wobei die omnidirektionale Antenne alternativ mit dem einen oder dem anderen der Empfangskanäle verbunden ist,
- zwei Empfangskanäle, die in der zweiten Vorrichtung enthalten sind.

8. Computerprogramm, **dadurch gekennzeichnet, dass** es Anweisungen umfasst, um durch eine Vorrichtung das Verfahren nach einem der Ansprüche 1 bis 5 durchzuführen, wenn das Programm von einem Prozessor der Vorrichtung ausgeführt wird.

9. Speichermittel, **dadurch gekennzeichnet, dass** sie ein Computerprogramm speichern, das Anweisungen umfasst, um durch eine Vorrichtung das Verfahren nach einem der Ansprüche 1 bis 5 durchzuführen, wenn das Programm von einem Prozessor der Vorrichtung ausgeführt wird.

## Claims

1. Method for selecting an antenna in a system comprising a first device (10) and at least one second, mobile device (30), the system forming a communication network in which the first device (10) communicates with the at least one second device (30) by using a medium access technique of time-division multiple access type in which each communication is done in frames, each frame being divided into a plurality of time slots comprising a first time slot allowing the first device (10) to transmit a first signal intended for the second device and allowing the second device to be synchronized in time on a time reference of the first device (10), and a second time slot allowing the second device to transmit a second signal in response to the first signal to acknowledge its presence in the system, the first device transmitting and receiving the signals via an antenna system comprising at least a number N of sectoral antennas with N greater than or equal to four and one omnidirectional antenna, **characterized in that** the method comprises the steps executed by the first device of:
- obtaining, in an acquisition mode, for each antenna of the antenna system, a first information item representative of a communication quality between the antenna and the second device;
- selecting, from the first information items representative of a communication quality that are obtained, the antenna for which the first information item representative of the communication quality is the highest, to transmit and/or receive data with the mobile device;
- obtaining, in a so-called tracking mode, if the selected antenna is a sectoral antenna, for the omnidirectional antenna and for each antenna of a group of M sectoral antennas comprising the selected sectoral antenna, with M strictly less than N, a second information item representative of a communication quality between the antenna and the second device;
- selecting, from the second information items representative of a communication quality that are obtained, the antenna for which the second information item representative of the communication quality is the highest, to transmit and/or receive data with the mobile device;
- obtaining, in the so-called tracking mode, for each antenna of the antenna system, a third information item representative of a communication quality between the antenna and the second device if the selected antenna is the omnidirectional antenna;
- selecting, from the third information items representative of a communication quality that are obtained, the antenna for which the third information item representative of the communication quality is the highest, to transmit and/or receive data with the mobile device.

2. Method according to Claim 1, **characterized in that** the method further comprises the step performed by the first device of checking whether the first information item representative of the highest communication quality is less than a predetermined threshold, and **in that** the first device remains in the acquisition mode as long as the first information item representative of the highest communication quality is less than a predetermined threshold.

3. Method according to any one of the preceding claims, **characterized in that** the method further comprises the step performed by the first device of checking whether the second or the third information item representative of the highest communication quality is less than a predetermined threshold, and **in that** the first device switches to the acquisition mode if the second information item representative of the highest communication quality is less than the predetermined threshold.

4. Method according to any one of the preceding claims, **characterized in that** N is equal to six, M is equal to three and the group of antennas comprises the sectoral antennas adjacent to the selected sectoral antenna.

5. Method according to any one of the preceding claims, **characterized in that** the first device comprises two reception channels and **in that** the omnidirectional antenna is linked alternately to one or other of the reception channels.

6. Device for selecting an antenna for a system (1) comprising a first device (10) and at least one second, mobile device (30), the system forming a communication network in which the first device (10) communicates with the at least one second device (30) by using a medium access technique of time-division multiple access type in which each communication is done in frames, each frame being divided into a plurality of time slots comprising a first time slot allowing the first device (10) to transmit a first signal intended for the second device and allowing the second device to be synchronized in time on a time reference of the first device (10), and a second time slot allowing the second device to transmit a second signal in response to the first signal to acknowledge its presence in the system, the first device transmitting and receiving the signals via an antenna system comprising at least a number N of sectoral antennas with N greater than or equal to four and one omnidirectional antenna, **characterized in that** the selection device is included in the first device and comprises:
- means for obtaining, in an acquisition mode, for each antenna of the antenna system, a first information item representative of a communication quality between the antenna and the second device;
- means for selecting, from the first information items representative of a communication quality that are obtained, the antenna for which the first information item representative of the communication quality is the highest, to transmit and/or receive data with the mobile device;
- means for obtaining, in a so-called tracking mode, if the selected antenna is a sectoral antenna, for the omnidirectional antenna and for each antenna of a group of M sectoral antennas comprising the selected sectoral antenna, with M strictly less than N, a second information item representative of a communication quality between the antenna and the second device;
- means for selecting, from the second information items representative of a communication quality that are obtained, the antenna for which the second information item representative of the communication quality is the highest, to transmit and/or receive data with the mobile device;
- means for obtaining, in the so-called tracking mode, for each antenna of the antenna system, a third information item representative of a communication quality between the antenna and the second device if the selected antenna is the omnidirectional antenna;
- means for selecting, from the third information items representative of a communication quality that are obtained, the antenna for which the third information item representative of the communication quality is the highest, to transmit and/or receive data with the mobile device.

7. System for selecting an antenna comprising a first device (10) and at least one second, mobile device (30), the system forming a communication network in which the first device (10) communicates with the at least one second device (30) by using a medium access technique of time-division multiple access type in which each communication is done in frames, each frame being divided into a plurality of time slots comprising a first time slot allowing the first device (10) to transmit a first signal to the second device and allowing the second device to be synchronized in time on a time reference of the first device (10), and a second time slot allowing the second device to transmit a second signal in response to the first signal to acknowledge its presence in the system, the first device transmitting and receiving the signals via an antenna system comprising at least a number N of sectoral antennas with N greater than or equal to four and one omnidirectional antenna, **characterized in that** the system comprises:
- means, included in the first device, of obtaining, in an acquisition mode, for each antenna of the antenna system, a first information item representative of a communication quality between the antenna and the second device;
- means, included in the first device, of selecting, from the first information items representative of a communication quality that are obtained, the antenna for which the first information item representative of the communication quality is the highest, to transmit and/or receive data with the mobile device,
- means, included in the first device, of obtaining, in a so-called tracking mode, if the selected antenna is a sectoral antenna, for the omnidirectional antenna and for each antenna of a group of M sectoral antennas comprising the selected sectoral antenna, with M strictly less than N, a second information item representative of a communication quality between the antenna and the second device;
- means, included in the first device, of selecting, from the second information items representative of a communication quality that are obtained, the antenna for which the second information item representative of the communication quality is the highest, to transmit and/or receive data with the mobile device,
- means, included in the first device, of obtaining, in the so-called tracking mode, for each antenna of the antenna system, a third information item representative of a communication quality between the antenna and the second device if the selected antenna is the omnidirectional antenna;
- means, included in the first device, of selecting, from the third information items representative of a communication quality that are obtained, the antenna for which the third information item representative of the communication quality is the highest, to transmit and/or receive data with the mobile device,
- two reception channels, included in the first device, the omnidirectional antenna being linked alternately to one or other of the reception channels,
- two reception channels, included in the second device.

8. Computer program, **characterized in that** it comprises instructions for the implementation, by a device, of the method according to any one of Claims 1 to 5, when said program is run by a processor of said device.

9. Storage means, **characterized in that** they store a computer program comprising instructions for the implementation, by a device, of the method according to any one of Claims 1 to 5, when said program is run by a processor of said device.
